# EUROPEAN PATENT APPLICATION

(11) **EP 4 187 753 A1**
(43) Date of publication of application: **31.05.2023**
(21) Application number: 21383071.4
(22) Date of filing: 25.11.2021
(51) Int. Cl.: H02J 7/35, H02S 20/32

(54) **SOLAR PANEL SYSTEM**

(71) Applicant: Soltec Innovations, S.L., 30500 Molina de Segura (ES)
(72) Inventor: Teruel Hernández, José Alfonso, 30007 Murcia (ES)

(57) **Abstract**

It is hereby provided a solar panel system tracked by a solar tracker with a solar tracker controller (93), and PV cells arranged on at least one of the sides of the solar panel operated by an actuator associated to the solar tracker controller (93). The solar panel described herein is equipped with a power circuit equipped with a DC/DC converter and charging the rechargeable battery (92); said power circuit being further comprising a maximum power point tracking module to maximize power extraction under all conditions and an estimation module adapted to perform periodic curve sweeps for non-direct temperature measurement and frontal irradiation measurements by periodically scanning the voltage-current thus calculating frontal irradiation and PV cell temperature from voltage-current values; a spectrometer is in charge of measuring spectrum incident on the back side of the panel. Hence the solar tracker is operated and the battery feeding the controller is charged according to data coming from sensors, the maximum power point tracking (MPPT) module and the estimation module.

## Description

### OBJECT OF THE INVENTION

The invention relates to the technical field of renewable energies and more particularly to solar energy.

The object of the invention is directed to an enhanced intelligent solar panel capable of measuring and managing the different power production parameters along with a controlled battery charge.

### BACKGROUND ART

Global demand for energy has increased in the last decades, current energy supply often comes from sources such as fossil fuels, including coal and oil, hydroelectric plants, nuclear sources and others. In addition to fossil fuels, other sources of energy have been harvested to meet our electricity needs; these embrace green energy sources which are renewable, clean, abundant and widespread. Certain technologies have been developed to capture, concentrate and store solar energy, whereas other technologies have been developed to convert solar energy into other useful forms of energy. Solar panels have been developed to convert sunlight into energy; for example, thermal solar panels convert electromagnetic radiation from the sun into thermal energy to heat homes, perform certain industrial processes, or power high-quality turbines to generate electricity whilst photovoltaic solar panels convert sunlight directly into electricity for a variety of applications. Photovoltaic solar panels are usually made up of a series of interconnected solar cells often arranged in series and / or in parallel groups of cells in series.

Solar trackers are mainly either directly powered from the grid or fed by the solar panel converting solar light into electricity delivered to the actuator driving the panel and the solar tracker controller (93).

Self-power solar trackers are those solar trackers considered to be independently fed from the power grid, namely being fed by batteries or by the electrical power produced by the solar panel when working; this last option has the well-known problem of the solar tracker being powered when and only when there is sun irradiation hitting the solar panel so the photovoltaic cells may convert said irradiation into electricity. In order to so, some solar trackers are furnished with accumulators or batteries taking care or power supply when no sun is available, in this sense US20170070187A1 discloses a solar tracking system for automatically controlling the tracking of at least one solar panel in a solar array table. The system of US20170070187A1 comprises a weather information unit associated with the solar panel, said weather information unit including a plurality of sensors configured to sense a plurality of weather parameters and generate a plurality of sensed signals, and a signal conditioning unit configured to receive the plurality of sensed signals and generate a plurality of conditioned signals corresponding to the plurality of sensed signals.

US20190036478A1 discloses a self-power solar panel with an energy system comprising a solar panel energy source comprising a first electrode and a second electrode and a DC to DC converter coupled to said electrodes, being a battery coupled to the DC to DC converter, a boost converter comprising a first lead and a second lead coupled to the battery device, and a capacitor coupled to the boost converter and configured to provide a stable voltage for the motor drive. The self-power solar panel, has a micro-controller comprising an input coupled to a motor current and a voltage, an input for a sensor to monitor a temperature of the battery, an input for current and voltage from the solar panel energy source, and input for a current and voltage for the battery device.

WO2020047167A1 discloses a solar panel with a self-powered controller deployed on a solar tracking system with multiple solar panel modules forming a grid of solar panel modules. The solar tracking system in WO2020047167A1 has a control system further including a plurality of self-powered controllers and a plurality of network control units in wireless communication with each other, the self-powered controllers providing the network control units real time information regarding shading experienced by the self-powered controllers. The solar tracking system further including a remote host, where the remote host receives communications from the control system. The solar tracking system where the remote host retrieves weather data and generates a performance model.

Current solutions provide self-powered solar panels being fed by a dedicated panel, hence, in current solutions a solar panel is exclusively used to charge the battery.

### SUMMARY OF THE INVENTION

The current invention is directed to an integrated and intelligent solar panel provided with sensors in an arrangement designed in such a way that batteries feeding the tracker are charged whilst parameters are measured in order to improve solar tracking; thus optimizing solar power conversion by accounting for parameters such as temperature, wind speed and orientation and front/rear radiation or front/rear spectrum when the object of the invention is applied to bifacial panels.

The measurement of solar radiation in the front side of the module or Plane of the Array (POA) can be measured indirectly with the short circuit current (Isc) produced by the front cells, to do so, the input DC converter of the power supply will be set to have zero volts as the output. The same will be done for the rear cell in order to measure the Isc and therefore the rear radiation.

The measurement of cell temperature and also be sensed indirectly by measuring the open circuit voltage (Voc) of the front cells. This can be performed by setting the input DC converter to maximum voltage. The relation between voltage and temperature is well know as a characteristic of each cell technology.

The Isc and Voc can also be obtained from a sweep between the minimum voltage to maximum voltage which will allow the controller to draw what is know as the IV curve of the front panel. The value of the current at zero voltage will be the Isc and the value of the voltage when the current is zero will be the Voc.

The batteries are meant to be charged by means of a power circuit with maximum power point tracking (MPPT) and with the optional functionality of making periodic sweeps of the voltage-current curve (I/V curve) in order to obtain indirect measurement of frontal and/or rear radiation and PV cell temperature.

From the set of elements of this integrated system, energy is obtained to charge batteries and information for the control of the solar tracker controller is also provided. Hence, the whole solar tracker is independently fed, not grid input needed, and wind and temperature data are provided to the solar tracker controller in order to process said data and command the actuator accordingly.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figures 1a, 1b.- Respectively show a layout of the front (fig. 1a) and back (fig. 1b) of the solar panel of the invention.
Figure 2.- Shows a diagram representing the flow of information and power between the different parts of the solar panel.
Figure 3.- Shows a diagram representing the different parts of the solar panel and their respective relationships.
Figure 4.- Shows a diagram representing a preferred embodiment of the solar panel system object of the invention.

### DETAILED DESCRIPTION

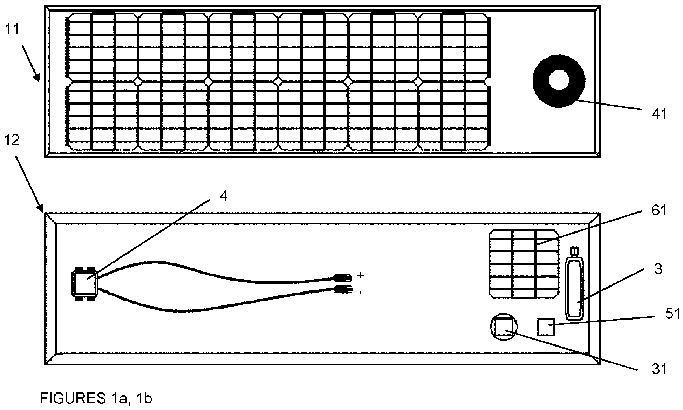

The object of the invention may be implemented on a solar panel (1) system, tracked by a solar tracker with a solar tracker controller (93), and PV cells (2) arranged on at least one of the front side (11) and back side (12) of the solar panel (1) which is in turn operated by an actuator associated to the solar tracker controller (93), being this preferred embodiment of the invention directed to a solar panel (1) as the one shown in figures 1a, 1b.

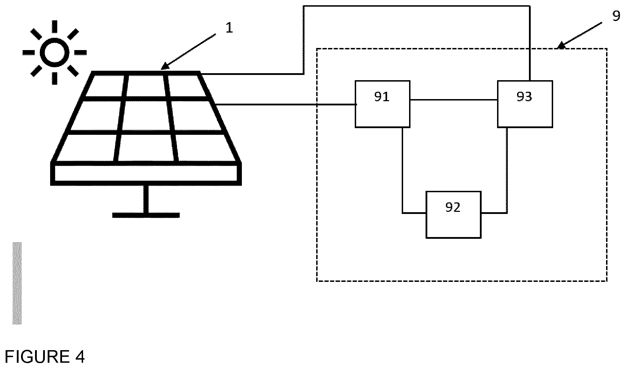

Therefore, in a preferred embodiment of the invention, it is provided the solar panel (1) system as the one depicted on figure 4 comprising at least one back PV cell (61) arranged at a back side (12) of the solar panel (1) and connected to the solar tacker box to measure back irradiance levels , PV cells (2) arranged on the front side (11) of the solar panel (1), the solar panel (1) connected to a rechargeable battery configured to feed a solar tracker operating the solar panel (1) and a solar tracker control box (9) comprising in turn the rechargeable battery, the solar tracker controller (93), and a DC/DC converter (91)connected to the solar tacker controller and fed by the PV cells (2) and configured to:
- Determine the rechargeable battery power level and charge the rechargeable battery,
- Track a maximum power point tracking (MPPT) module configured to maximize power extraction, and
- Periodically analyse voltage-current curves (I / V curves) to measure: frontal irradiation and PV cells (2) and temperature.

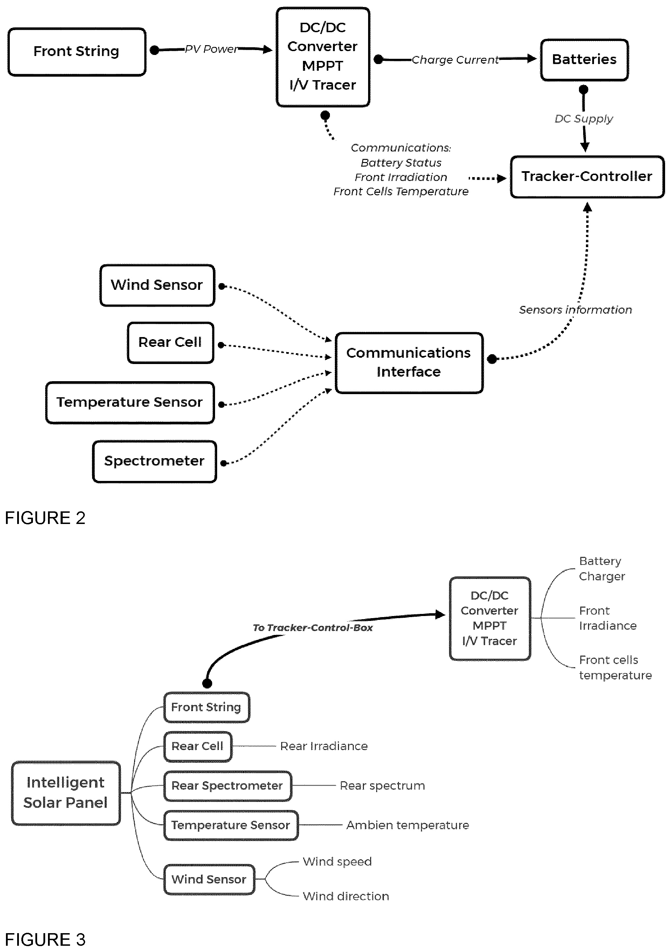

As the skilled person would perceive from figure 2, the solar panel (1) comprises a power circuit equipped with a DC/DC converter (91) connected to the PV cells (2) and the rechargeable battery and configured to determine its charge level and charge the rechargeable battery if needed from the PV cells (2); said power circuit may be further equipped with a maximum power point tracking (MPPT) module to maximize power extraction under all conditions and/or an estimation module adapted to perform periodic curve sweeps for non-direct temperature measurement and frontal irradiation measurements by periodically scanning the voltage-current (I / V curve) thus calculating frontal irradiation and PV cells (2) temperature from voltage-current (I / V curve) values. Being the power circuit in charge of keeping battery charge levels at operative levels and recharging the battery when needed, the power circuit may also be configured to determine when the rechargeable battery requires charging, consequently charging it. Hence, the rechargeable battery is electrically connected to the PV cells (2) via the DC/DC converter (91) so rechargeable battery is fed, whereas the solar tracker controller (93) (not represented in figures) is provided with information in order to accurately calculate the required commands for the solar tracker (not represented in figures) operating an actuator positioning the solar panel (1) to maximum power conversion positions.

The solar panel (1) further comprises a plurality of sensors (31,41,51) respectively configured to sense and measure components of physical phenomena, in this preferred embodiment of the invention a spectrometer (31) is preferably configured at the back side (12) of the solar panel (1) to sense and measure light spectrum incident on said back side (12) of the solar panel (1); in alternative embodiments of the invention, the spectrometer (31) and an additional spectrometer may be respectively arranged at each side (11,12) of the solar panel (1), thus measuring the spectrum of the irradiation impacting each side (11,12) of the solar panel (1); in this preferred embodiment of the invention shown in figures 1a , 1b the spectrometer (31) is arranged at the back side (12) of the solar panel (1), is provided along with a back irradiation sensor (61) also arranged at the back side (12) of the solar panel (1) and configured to measure back irradiation, back irradiation sensor (61) being a rear PV cell (61).

In an alternative embodiment of the invention where spectrometers are respectively arranged at the sides (11,12) of the solar panel, the additional spectrometer, not shown in figures, may be arranged at the front side (11) of the solar panel (1) to sense radiation incident on said front side (11) of the solar panel (1) thus defining the solar panel (1) furnished with two spectrometers respectively arranged at each side (11,12) of the solar panel (1).

A wind sensor (41) is preferably arranged on the front side (11) of the solar panel (1), this wind sensor (41) is configured to measure wind speed and direction surrounding the solar panel (1). An ambient temperature sensor (51) configured to measure ambient temperature, preferably arranged on one of the sides (11,12) of the solar panel (1).

As per figures 1a, 1b the solar panel (1) is provided with a sensor junction box (3) where the sensors (41,51) and the back PV cell (61) are connected to, so that the solar tracker controller (93), being connected to said sensor junction box (3), is fed with data from the sensors (41,51) and the back PV cell (61). A a power junction box (4) preferably arranged and the back side (12) is connected to the PV cells (2) to deliver power from said PV cells (2).

The solar panel (1) is equipped with a communications module comprising a communication interface connecting the sensors (41,51), the spectrometer (31) and the back PV cell (61) to the solar tracker controller (93) and a transfer module, preferably allocated at the power circuit, connecting the power circuit to the solar tracker controller (93) providing the solar tracker controller (93) with data related to at least one of: battery charge level, front irradiation and PV cells (2) temperature.

## Claims

1. A solar panel (1) system said solar panel comprising PV cells (2) arranged on a front side (11) of the solar panel (1), the solar panel (1) system being **characterised by** comprising :
• a solar tracker control box (9) fed by the PV cells (2) and comprising in turn:
∘ a rechargeable battery (92),
∘ a solar tracker controller (93),
∘ a DC/DC converter (91) connected to the solar tacker controller (93) and configured to:
∘ determine the rechargeable battery (92) power level and charge the rechargeable battery (92),
∘ track a maximum power point tracking (MPPT) module configured to maximize power extraction, and
∘ periodically analyse voltage-current curves (I / V curves) to measure: frontal irradiation and PV cells (2) and temperature, and
• at least one back PV cell (61) arranged at a back side (12) of the solar panel (1) and connected to the solar tacker box to measure back irradiance levels.

2. The solar panel (1) system of claim 1 further comprising at least one of:
a. a spectrometer (31) arranged at the back side (12) of the solar panel (1) to sense and measure light spectrum incident on said back side (12) of the solar panel (1),
b. a wind sensor (41) arranged on the front side (11) of the solar panel (1), and configured to measure wind speed and direction surrounding the solar panel (1), and
c. an ambient temperature sensor (51) configured to measure ambient temperature.

3. The solar panel (1) system of claim 1 wherein the solar tracker controller (93) box is connected to a communications module connecting the solar tracker controller (93) box to receive data at least from the back PV cell (61) and the DC/DC converter.

4. The solar panel (1) system of any one of claims 1 to 3, further comprising an additional spectrometer arranged at each side (11,12) of the solar panel (1), for measuring irradiation impacting each side (11,12) of the solar panel (1).

5. The solar panel (1) system of any one of claims 1 to 5, further comprising a junction box (3) interconnecting the sensors (31,41,51) and the back PV cell (61) to provide the solar tracker controller (93) with data related to at least one of: battery charge level, front irradiation and PV cells (2) temperature.

6. The solar panel (1) system of any one of the preceding claims, further comprising a power junction box (4) connected to the PV cells (2) to deliver power from said PV cells (2).
